## Europäisches Patentamt

## European Patent Office

## Office européen des brevets

(11) Veröffentlichungsnummer: **0 101 530**
**B1**

(12) ## EUROPÄISCHE PATENTSCHRIFT

(45) Veröffentlichungstag der Patentschrift:
**14.05.86**

(51) Int. Cl.⁴: **G 03 B 27/52**

(21) Anmeldenummer: **82710042.1**

(22) Anmeldetag: **20.08.82**

(54) **Kopiergerät mit einer Führung für eine Kassette.**

(43) Veröffentlichungstag der Anmeldung:
**29.02.84 Patentblatt 84/9**

(45) Bekanntmachung des Hinweises auf die Patenterteilung:
**14.05.86 Patentblatt 86/20**

(84) Benannte Vertragsstaaten:
**BE CH DE FR GB IT LI SE**

(56) Entgegenhaltungen:
**AU - B - 487 589**
**DE - A - 2 160 211**
**DE - A - 2 701 454**
**DE - B - 2 311 798**

(73) Patentinhaber: **Develop Dr. Eisbein GmbH & Co.,
Dieselstrasse 8, D-7016 Gerlingen 1 (DE)**

(72) Erfinder: **Moser, Kurt, Obere Ringstrasse 31,
D-7016 Gerlingen (DE)**

(74) Vertreter: **Wilhelm, Hans-Herbert, Dr.-Ing. et al, Wilhelm
& Dauster Patentanwälte Hospitalstrasse 8,
D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Kopiergerät mit einer Führung für eine in das Kopiergerät einzusetzende Kassette, die einen Blattstapel aus Kopierpapier, insbesondere aus einseitig beschichtetem Kopierpapier, enthält und die als ein flacher, rechteckiger Behälter gestaltet ist, der die in das Kopiergerät einzuführende vordere Stirnkante sowie daran anschliessende Teile der Oberseite, der Seitenkanten und der Unterseite des Blattstapels freilässt, mit einer Einrichtung zum Überwachen des ordnungsgemässen Einsetzens der Kassette.

Bei einem manuell zu betätigenden Blattspender (DE-A 2 701 454), der insbesondere für Kopiergeräte bestimmt ist, war es bekannt, eine Einrichtung zum Überwachen des ordnungsgemässen Einsetzens einer Kassette vorzusehen, die einen Blattstapel enthält. Diese Überwachungseinrichtung besteht aus einem Klinkenmechanismus, der das Betätigen eines Blattförderers verhindert, wenn keine Kassette eingesetzt oder die Kassette nicht in ihre Endstellung gebracht worden ist.

Kopiergeräte der eingangs genannten Art sind vorwiegend sogenannte Bürokopiergeräte, die auch von nicht besonders für die Bedienung dieser Geräte geschulten Personen benutzt werden. Die Praxis hat gezeigt, dass es immer wieder vorkommt, dass Schwierigkeiten dadurch entstehen, dass das Einsetzen der Kassetten nicht korrekt ausgeführt wird. Obwohl die Kassetten meist deutlich gekennzeichnet sind, kommt es immer wieder einmal vor, dass die Kassetten seitenvertauscht eingeführt werden, was insbesondere bei der Verwendung von beschichtetem Kopierpapier dazu führt, dass ein Kopieren nicht möglich ist. Häufig kommt es auch vor, dass die Kassetten nicht korrekt in ihre endgültige Position gebracht werden, was dann die Gefahr herbeiführt, dass sich bei einem Kopierversuch ein Papierstau innerhalb des Gerätes bildet.

Der Erfindung liegt die Aufgabe zugrunde, ein Kopiergerät und die dazugehörige Kassette der eingangs genannten Art so auszubilden, das Fehler bei dem Einsetzen einer Kassette mit Sicherheit vermieden werden. Diese Aufgabe wird dadurch gelöst, Dass die Einrichtung einen Überwachungsschalter enthält, dem als Betätigungselement ein Winkelhebel zugeordnet ist, der zwei Arme aufweist, die parallel zum Boden der Kassette ausgerichtet sind, und dass die Kassette an einer Seitenkante eine Mitnahmekante für den ersten, seitlich in die Führung hineinragenden Arm und in Abstand dazu eine Aussparung aufweist, in die der zweite Arm beim Verschwenken des Winkelhebels infolge Mitnahme des ersten Arms durch die Mitnahmekante eindringt.

Durch diese Ausbildung wird erreicht, dass die Überwachungseinrichtung immer dann anspricht, wenn keine Kassette in dem Kopiergerät vorhanden ist oder die Kassette falsch eingeführt oder nicht in ihre exakte Betriebsstellung gebracht worden ist. Der erste Arm des Winkelhebels taucht dabei in den Blattstapel zwischen zwei Blätter ein, ohne von diesem betätigt zu werden. Erst die Mitnahmekante der Kassette kann ein Verschwenken des Winkelhebels bewirken. Dies ist jedoch nur dann möglich, wenn der Winkelhebel sich mit seinem zweiten Arm in eine Aussparung der Kassette hineinbewegen kann, so dass nur dann eine Umschaltung des Überwachungsschalters erfolgen kann, wenn die Kassette seitenrichtig eingeführt und auch in ihre exakte Betriebsposition gebracht worden ist.

Um das Eindringen des ersten Armes des Winkelhebels in den Blattstapel zu erleichtern und die Gefahr des Beschädigens einzelner Blätter zu vermeiden, sind bei einer vorteilhaften Ausgestaltung die Arme des Winkelhebels schneidenartig angeschrägt. Da auch der zweite Arm seitlich in den Blattstapel hineintaucht, ist es zweckmässig, wenn das der Kassette zugekehrte Ende des zweiten Armes angeschärft ist.

Um sicherzustellen, das nicht ungewollt die freie vordere Stirnkante des Blattstapels zu einer Betätigung des Winkelhebels und damit des Überwachungsschalters führt, wird in zweckmässiger Ausgestaltung der Erfindung vorgesehen, dass der Winkelhebel mit einer Feder in Richtung zur Grundstellung belastet ist. Diese Feder wird so ausgelegt, dass sie die Kraft aufbringt, die der Winkelhebel zum Eintauchen in den Blattstapel benötigt, ohne dass er dabei verdreht wird.

Um sicherzustellen, dass nicht nur eine kleine Bewegung des Winkelhebels bereits zu einer Betätigung des Überwachungsschalters führt, ist zweckmässig der Überwachungsschalter ein ein Sprungschaltwerk aufweisender Mikroschalter. Damit wird zum einen erreicht, dass erst nach einem bestimmten Weg des Winkelhebels der Schaltvorgang ausgelöst wird, während zum anderen das Schalten unabhängig davon ist, wie schnell oder langsam die Kassette in das Kopiergerät eingesetzt wird.

Weitere Merkmale und Vorteile der Erfindung ergeben sich aus der nachfolgenden Beschreibung der in der Zeichnung dargestellten Ausführungsform und den Unteransprüchen.

Fig. 1 zeigt einen Teilschnitt durch ein Kopiergerät mit einer erfindungsgemässen Überwachungseinrichtung für ein ordnungsgemässes Einsetzen einer Kassette in der Ausgangsstellung,

Fig. 2 den Teilschnitt nach Fig. 1 mit durch die ordnungsgemäss eingeführte Kassette betätigter Überwachungseinrichtung,

Fig. 3 einen Querschnitt durch einen Arm eines Winkelhebels in grösserem Massstab,

Fig. 4 einen Querschnitt durch einen weiteren Arm des Winkelhebels in grösserem Massstab und

Fig. 5 eine Seitenansicht des vorderen Bereiches einer mit der Überwachungseinrichtung des Kopiergerätes zusammenarbeitenden Kassette.

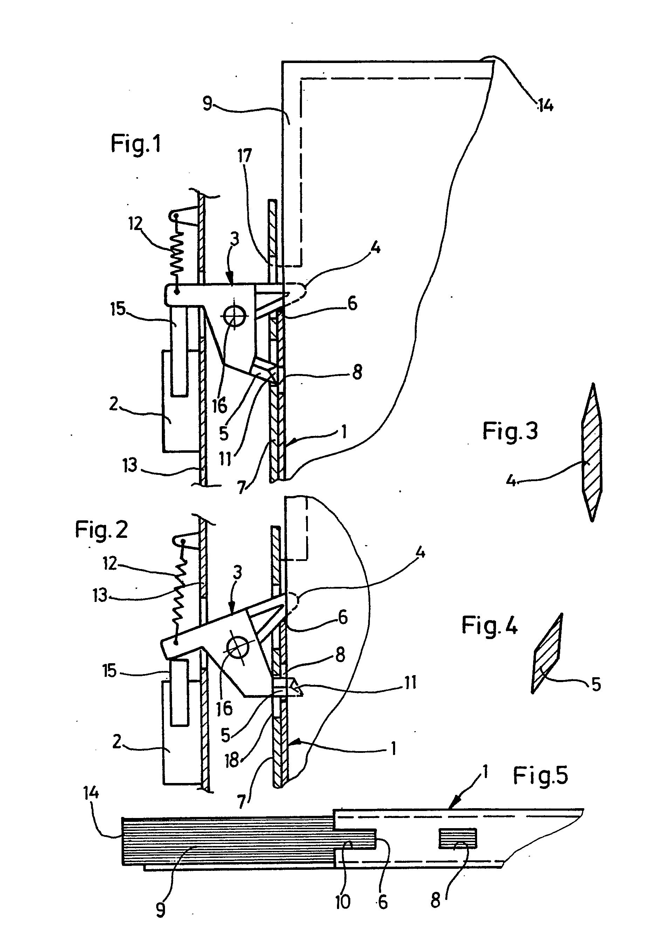

Das nur in einem relativ kleinen Ausschnitt in Fig. 1 und 2 dargestellte Kopiergerät besitzt zwei sich in seiner Längsrichtung erstreckende parallele Gehäusewände 13, von welchen nur eine (in Fig. 1 und 2 links) dargestellt ist. An diesen Gerätegehäusewänden sind die einzelnen Elemente und Aggregate des Kopiergerätes in üblicher Weise angebracht. Zwischen den beiden Wänden befindet sich eine Führung 7, beispielsweise in Form von zwei zueinander hin offenen U-Profilen, die zur Aufnahme einer Kassette 1 dienen. Die Kassette 1 (siehe auch Fig. 5) bildet einen flachen, rechteckigen Behälter, in welchem ein Blattstapel 9 aus Kopierpapier untergebracht ist. Die Kassette 1, die vorzugsweise aus einem Kartonzuschnitt hergestellt wird, umhüllt den Blattstapel 9 nahezu vollständig, wobei jedoch die vordere, in das Kopiergerät einzuschiebende Stirnkante 14 sowie die daran anschliessenden Teile der Unterseite, der Oberseite und der beiden Seitenkanten freigelassen sind, um den Blattstapel für Einrichtungen zum Vereinzeln und zum Abziehen einzelner Blätter zugänglich zu machen. Es ist wichtig, dass die Kassette 1 und damit auch der Blattstapel 9 zu der folgenden Vereinzelungs- und Abzugseinrichtung exakt ausgerichtet ist, damit diese zuverlässig funktionieren können. Die Kassette 1 kann aus dem Kartonzuschnitt in der in insbesondere in Fig. 5 dargestellten Gestalt hergestellt werden, in welcher sie betriebsbereit ist, d.h. der vordere Bereich des Blattstapels 9 freigelegt ist. Es ist auch möglich, die aus einem Kartonzuschnitt hergestellte Kassette 1 so auszubilden, dass mittels Aufreisslinien ein vorderer Teil der Kassette abgetrennt wird, so dass dadurch erst der vordere Bereich des Blattstapels 9 freigelegt wird.

Um zu erreichen, dass nicht nur die exakte Einschubtiefe der Kassette sondern auch ihre seitengerechte Einbaulage überwacht wird, ist eine Überwachungseinrichtung vorgesehen, die auf die Kassette 1 anspricht und die gleichzeitig die exakte Lage der Kassette 1 abtastet. Die Überwachungseinrichtung enthält einen Überwachungsschalter 2, der in dem Steuerstromkreis des Kopiergerätes angeordnet ist und der das Kopiergerät auf seine Kopierbereitschaft schaltet, wenn eine Kassette in das Kopiergerät in ihrer exakten Lage eingeführt ist. Der als Mikroschalter mit einem Schnappschaltwerk ausgebildete Überwachungsschalter 2 wird durch die ordnungsgemäss eingeschobene Kassette 1 (Fig. 2) geschlossen, wodurch das Kopiergerät kopierbereit wird.

Die Betätigung der Schaltfahne 15 des an der Kopiergerätegehäusewand 13 befestigten Überwachungsschalters 2 erfolgt mittels eines Winkelhebels 3, der um eine zu den Ebenen der Blätter des Blattstapels 9 senkrechte Achse 16 verschwenkbar ist. Der Winkelhebel 3 besitzt einen ersten Arm 4, der durch eine Aussparung 17 der Führung 7 in den Bereich der Kassette 1 ragt. Dieser Arm 4, der sich in Richtung der Ebene der Blätter des Blattstapels 9 und damit parallel zum Boden der Kassette 1 erstreckt, ist schneidenartig angeschärft (Fig. 3), so dass er in den Blattstapel 9 zwischen zwei Blätter eindringt, wenn die Kassette 1 mit dem Blattstapel 9 eingeführt wird. Er wird von einer Zugfeder 12 in seiner Grundstellung (Fig. 1) gehalten, die so ausgelegt ist, dass der zum Eintauchen des Armes 4 in den Blattstapel 9 benötigte Kraftaufwand nicht ausreicht, um den Winkelhebel 3 zu verschwenken. Erst wenn eine Mitnahmekante 6, die sich in der Seitenkante der Kassette 1 anschliessend an den freigelegten Bereich befindet, gegen den Arm 4 anläuft, wird durch ein weiteres Einschieben der Kassette 1 der Winkelhebel 3 unter Überwindung der Kraft der Zugfeder 12 verschwenkt (Fig. 2).

Um zusätzlich auch noch überwachen zu können, dass die Kassette 1 nicht etwa seitenvertauscht eingesetzt worden ist, d.h. die Unterseite als Oberseite eingeführt worden ist, ist die Überwachungseinrichtung so gestaltet, dass sie auch noch die korrekte Lage der Kassette 1 in diesem Sinne überwacht. Hierzu ist der Winkelhebel 3 in Abstand zu dem Arm 4 mit einem zweiten Arm 5 versehen, der in der Grundstellung (Fig. 1) ausserhalb des Raumes zwischen der Führung 7 liegt. Wenn der Winkelhebel 3 durch Anlaufen der Mitnahmekante 6 gegen den Arm 4 verschwenkt wird, dringt dieser zweite Arm 5 durch eine Aussparung 18 der Führung 7 in den Bereich der Kassette ein. Die Kassette ist in diesem Bereich mit einer Aussparung 8 versehen, die es dem Arm 5 ermöglicht, durch diese Aussparung hindurch in den Blattstapel 9 einzutauchen. Um das Eintauchen ohne Beschädigen der Blätter zu ermöglichen, ist auch der zweite Arm 5, der ebenfalls parallel zu den Ebenen der Blätter des Blattstapels und damit zum Boden der Kassette 1 ausgerichtet ist, angeschärft. Dabei ist zusätzlich sein der Kassette 1 zugekehrtes Ende 11 angespitzt.

Wenn die Kassette 1 seitenverkehrt in die Führung 7 eingeführt wird, befindet sich die Aussparung 8, die nur an einer Seitenkante der Kassette 1 angebracht ist, nicht in dem dem Arm 5 gegenüberliegenden Bereich, so dass der Winkelhebel 3 nicht weiterbewegt werden kann. Ein Einschieben der Kassette in dieser seitenvertauschten Lage wird somit verhindert.

Die Kassette 1, die aus einem Kartonzuschnitt hergestellt ist, ist anschliessend an den die Seitenkante des Blattstapels 9 freilassenden Breich mit einer Ausstanzung 10 versehen, die zu der vorderen Stirnseite des Blattstapels hin offen ist. Die hintere Kante dieser Ausstanzung 10 bildet die Mitnahmekante 6, durch die der Winkelhebel 3 verstellbar ist. Die Aussparung 8 ist in der gleichen Seitenkante der Kassette 1 ebenfalls in Form einer Ausstanzung angebracht. Diese Ausstanzungen lassen sich sehr exakt bemessen, so dass eine hohe Genauigkeit für das Ausrichten der exakten Lage der Kassette 1 gewährleistet wird.

Die Führung 7 des Kopiergerätes nach Fig. 1 und 2 ist für eine Kassette 1 bestimmt, die an ein bestimmten Papierformat angepasst ist. Wenn eine Kassette 1 mit Papier von anderem Format kopiert werden soll, so wird die lösbar befestigte Führung 7 ausgebaut. Es kann vorgesehen werden, dass dann eine gleichartige, auf das andere Format der Kassette abgestimmte Führung 7 eingebaut wird. Ebenso ist es möglich, für die Kassette 1 ortsfeste Führungsmittel vorzusehen, beispielsweise in Form von an dem zwischen den Geräteseitenwänden 13 befindlichen Boden angebrachten Rippen. Diese Führungsmittel übernehmen dann die Führung der Kassette 1, wenn die Führung 7 (die auf eine schmalere Kassette ausgelegt ist) ausgebaut ist. Abhängig von dem Format der Kassette 1, d.h. von der Breite der Kassette 1, wird auch der Winkelhebel 3 ausgelegt. Dabei bleibt seine Grundform und ebenso die Funktion des Schaltmechanismus unverändert. Lediglich die Länge des Armes 4 und insbesondere des Armes 5 wird zur Anpassung an die Breite der Kassette 1 verändert.

**Patentansprüche**

1. Kopiergerät mit einer Führung für eine in das Kopiergerät einzusetzende Kassette, die einen Blattstapel aus Kopierpapier, insbesondere aus einseitig beschichtetem Kopierpapier, enthält und die als ein flacher, rechteckiger Behälter gestaltet ist, der die in das Kopiergerät einzuführende vordere Stirnkante sowie daran anschliessende Teile der Oberseite, der Seitenkanten und der Unterseite des Blattstapels freilässt, mit einer Einrichtung zum Überwachen des ordnungsgemässen Einsetzens der Kassette, dadurch gekennzeichnet, dass die Einrichtung einen Überwachungsschalter (2) enthält, dem als Betätigungselement ein Winkelhebel (3) zugeordnet ist, der zwei Arme (4, 5) aufweist, die parallel zum Boden der Kassette (1) ausgerichtet sind und dass die Kassette an einer Seitenkante eine Mitnahmekante (6) für den ersten, seitlich in die Führung (7) hineinragenden Arm (4) und in Abstand dazu eine Aussparung (8) aufweist, in die der zweite Arm (5) beim Verschwenken des Winkelhebel (3) infolge Mitnahme des ersten Arms (4) durch die Mitnahmekante (6) eindringt.

2. Kopiergerät nach Anspruch 1, dadurch gekennzeichnet, dass die Arme (4, 5) des Winkelhebels (3) schneidenartig angeschrägt sind.

3. Kopiergerät nach Anspruch 1 oder 2, dadurch gekennzeichnet, dass das der Kassette (1) zugekehrte Ende (11) des zweiten Armes (5) angeschärft ist.

4. Kopiergerät nach einem der Ansprüche 1 bis 3, dadurch gekennzeichnet, dass der Winkelhebel (3) mit einer Feder (12) in Richtung zur Grundstellung belastet ist.

5. Kopiergerät nach einem der Ansprüche 1 bis 4, dadurch gekennzeichnet, dass der Überwachungsschalter (2) ein ein Sprungschaltwerk aufweisender Mikroschalter ist.

6. Kopiergerät nach Anspruch 5, dadurch gekennzeichnet, dass der Überwachungsschalter (2) als Unterbrecher im Steuerstromkreis angeordnet ist.

7. Kassette zur Verwendung in dem Kopiergerät nach einem der Ansprüche 1 bis 6, die als ein Behälter gestaltet ist, der die vordere Stirnkante sowie daran anschliessende Teile der Oberseite, der Seitenkanten und der Unterseite eines darin aufgenommenen Blattstapels freilässt, dadurch gekennzeichnet, dass eine der Seitenkanten anschliessend an den freiliegenden Teil des Blattstapels (9) mit einer Mitnahmekante (6) und in Abstand dazu mit einer Aussparung (8) versehen ist.

8. Kassette nach Anspruch 7, dadurch gekennzeichnet, dass als Mitnahmekante (6) das Ende einer zur vorderen Stirnkante des Blattstapels (9) offene Ausstanzung (10) in der aus einem Kartonzuschnitt gebildeten Kassette (1) dient.

9. Kassette nach Anspruch 7 oder 8, dadurch gekennzeichnet, dass die Aussparung (8) aus der Seitenkante der aus einem Kartonzuschnitt gebildeten Kassette (1) ausgestanzt ist.

## Claims

1. Copier having a guide for a cassette which is to be inserted into the copier, contains a stack of sheets of copying paper, especially unilaterally coated copying paper, and is in the configuration of a flat, rectangular container which leaves free the forward end edge, to be introduced into the copier, and adjoining parts of the upper side, the side edges and the under side of the sheet stack, with a device for monitoring the correct insertion of the cassette, characterised in that the device contains a monitor switch (2) to which there is allocated as actuating element a bell-crank lever (3) having two arms (4, 5) which are oriented parallel to the bottom of the cassette (1) and in that the cassette comprises on one side edge an entraining edge (6) for the first arm (4) which extends laterally into the guide (7), and at a distance from the entraining edge an aperture (8) into which the second arm (5) penetrates in the pivoting of the bell-crank lever (3) as a result of entraining of the first arm (4) by the entraining edge (6).

2. Copier according to Claim 1, characterised in that the arms (4, 5) of the bell-crank lever (3) are bevelled in knife-edge manner.

3. Copier according to Claim 1 or 2, characterised in that the end (11) of the second arm (5) towards the cassette (1) is sharpened.

4. Copier according to one of Claims 1 to 3, characterised in that the bell-crank lever (3) is loaded with a spring (12) in the direction towards the basic position.

5. Copier according to one of Claims 1 to 4, characterised in that the monitor switch (2) is a microswitch having a quick-action switch mechanism.

6. Copier according to Claim 5, characterised in that the monitor switch (2) is arranged as interruptor in the control current circuit.

7. Cassette for use in the copier according to one of Claims 1 to 6, which is formed as a container which leaves free the forward end edge, and adjoining parts of the upper side, the side edges and the under side of a stack of sheets accomodated therein, characterised in that one of the side edges is provided, adjoining the exposed part of the sheet stack (9), with an entraining edge (6) and at a distance therefrom with an aperture (8).

8. Cassette according to Claim 7, characterised in that the end of a punched-out aperture, open towards the forward end edge of the sheet stack (9), in the cassette (1) formed from a cardboard cut-out piece, serves as entraining edge (6).

9. Cassette according to Claim 7 or 8, characterised in that the aperture (8) is punched out of the side edge of the cassette (1) formed from a cardboard cut-out piece.

## Revendications

1. Appareil de copiage ou copieur comportant, d'une part un guidage pour une cassette qui est destinée à être introduite dans cet appareil, qui contient une pile de feuilles de papier à copier, notamment de papier enduit d'un seul côté, et qui a la forme d'un récipient rectangulaire plat laissant en évidence le bord antérieur à insérer dans l'appareil ainsi que les parties adjacentes du dessus, des côtés et du dessous de la pile, et d'autre part un dispositif de contrôle de l'insertion correcte de cette cassette, caractérisé en ce que le dispositif comporte un interrupteur (2) de contrôle avec lequel coopère un levier coudé (3) constituant l'élément de manoeuvre et comportant deux bras (4, 5) qui sont orientés parallèlement au-dessous de la cassette (1) et en ce que cette cassette présente sur un côté une arête (6) d'entraînement du premier bras (4), lequel pénètre latéralement dans le couloir (7) de guidage et, à une certaine distance, une fenêtre (8) dans laquelle le second bras (5) pénètre quand le levier (3) pivote sous l'effet de l'entraînement du premier bras (4) par l'arête (6) d'entraînement.

2. Copieur selon la revendication 1, caractérisé en ce que les bras (4, 5) du levier coudé (3) sont biseautés en forme de couteaux.

3. Copieur selon la revendication 1 ou 2, caractérisé en ce que l'extrémité (11) du second bras (5) tournée vers la cassette (1) est effilée.

4. Copieur selon l'une des revendications 1 à 3, caractérisé en ce que le levier coudé (3) est sollicité par un ressort (12) à sa position initiale.

5. Copieur selon l'une des revendications 1 à 4, caractérisé en ce que l'interrupteur (2) de contrôle est un microinterrupteur comportant un mécanisme à déclenchement brusque.

6. Copieur selon la revendication 5, caractérisé en ce que l'interrupteur (2) de contrôle est monté en interrupteur général dans le circuit électrique de commande.

7. Cassette destinée à être utilisée dans le copieur selon l'une des revendications 1 à 6 et ayant la conformation d'un récipient qui laisse en évidence le bord antérieur et les parties adjacentes du dessus, des côtés et du dessous d'une pile de feuilles qu'elle con-tient, caractérisée en ce que l'un de ses côtés comporte une arête (6) d'entraînement adjacente à la partie apparente de la pile (9) et, à une certaine distance de cette encouche, une fenêtre (8).

8. Cassette selon la revendication 7, caractérisée en ce que l'arête (6) d'entrainement est l'extrémité d'une encouche (10) ouverte du côté du bord antérieur de la pile (9) de feuilles et découpée dans la cassette (1) façonnée à partir d'une découpe de carton.

9. Cassette selon la revendication 7 ou 8, caractérisée en ce que la fenêtre (8) est découpée dans le côté de la cassette (1) façonnée à partir d'une découpe de carton.

Fig.1

Fig.2

Fig.3

Fig.4

Fig.5